# EUROPEAN PATENT APPLICATION

(11) **EP 1 632 666 A1**
(43) Date of publication of application: **08.03.2006**
(21) Application number: 04255347.9
(22) Date of filing: 03.09.2004
(51) Int. Cl.: F02D 19/10, F02B 43/00, F02M 25/14

(54) **A method for improving the power output of a dual-fuel gas engine**

(71) Applicant: Infineum International Limited, Abingdon, Oxfordshire OX13 6BB (GB)
(72) Inventor: Hitchings, Greg J., Abingdon, Oxfordshire OX14 1SL (GB); Chambard, Laurent, Engelwood, New Jersey 07631 (US)
(74) Representative: Lewis, Pauline Therese

(57) **Abstract**

A method for improving the power output of a dual-fuel gas engine including a gas charge and a diesel charge. The method includes the step of adding an antiknock additive to the diesel charge.

## Description

This invention relates to a method for improving the power output of a dual-fuel gas engine.

Spark-ignited gas engines produce lower emissions (including particulates and nitrogen oxides (NOₓ)) than diesel engines, but diesel engines are better in terms of mechanical efficiency, including running costs, and power output in terms of KW for a given engine size. Dual-fuel gas engines are a good compromise between spark-ignited gas engines and diesel engines because they produce lower emissions than diesel engines and their power output is higher than spark-ignited engines; unfortunately, their power output is not as high as diesel engines.

A dual-fuel gas engine uses a mixture of a natural gas charge and a diesel charge, which is ignited using a diesel 'pilot', which acts like a sparkplug. The diesel charge is injected directly into the combustion chamber, while the gas charge is introduced into the air intake by carburetion or by gas injection. The mixture of natural gas and diesel varies according to the load and the duty cycle of the engine, ranging anywhere from 80% down to 0% gas charge. At low engine loads the diesel charge tends to be higher whereas at higher engine loads, it is possible to use a higher gas charge. Typically, a dual-fuel engine runs on about 1-10%, preferably 1-5%, diesel charge with the rest of the energy supplied by the natural gas charge. The mechanical efficiency in a dual-fuel engine is about 10% better than in a spark-ignited natural gas engine.

An aim of the present invention is to improve the power output of a dual-fuel gas engine.

In accordance with the present invention there is provided a method for improving the power output of a dual-fuel gas engine including a gas charge and a diesel charge, the method including the step of adding an anti-knock additive to the diesel charge.

In accordance with the present invention there is also provided a dual-fuel gas engine including a gas charge and a diesel charge; the diesel charge including an anti-knock additive.

In a further aspect of the present invention, there is also provided use of an anti-knock additive to increase power output of a dual-fuel engine including a gas charge and a diesel charge, the anti-knock additive being added to the diesel charge.

Finally, there is provided a diesel fuel including an anti-knock additive.

The anti-knock additive can increase the power output of a dual-fuel gas engine by at least 5%, preferably by at least 10%.

In the dual-fuel gas engine, the diesel charge is usually less than 10%, such as less than 5%, of the total fuel charge in the dual-fuel gas engine.

The anti-knock additive is preferably at least one additive selected from: lead alkyls, methyl cylcopentadienyl manganese tricarbonyls, organometallic anti-knocks and organic anti-knocks.

The anti-knock additive is preferably selected from: tetraethyl lead, tetramethyl lead, diethyldimethyl lead and ethyltrimethyl lead, optionally with a lead scavenger.

The anti-knock additive is preferably a manganese compound such as methyl cyclopentadienyl manganese tricarbonyl.

The anti-knock additive is preferably an iron compound such as ferrocene or iron carboxylate.

The anti-knock additive is preferably a combination of an alkyl lead and an organometalic anti-knock compound.

The organic anti-knock additive is preferably selected from: amines, hydrazines, N-nitroamines, phenols, formates, oxalates, iodine and selenium.

The anti-knock additive is preferably present in an amount ranging from 1 to 5,000 ppm, preferably 1 to 2,500 ppm, and more preferably 1 to 1,000 ppm, based on the total mass of fuel charge.

## Claims

1. A method for improving the power output of a dual-fuel gas engine including a gas charge and a diesel charge, the method including the step of adding an anti-knock additive to the diesel charge.

2. A dual-fuel gas engine including a gas charge and a diesel charge, the diesel charge including an anti-knock additive.

3. Use of an anti-knock additive to increase power output of a dual-fuel engine including a gas charge and a diesel charge, the anti-knock additive being added to the diesel charge.

4. Diesel fuel including an anti-knock additive.

5. The method, dual-fuel gas engine, use or diesel fuel as claimed in any one of the preceding claims, wherein the diesel charge is less than 10%, preferably less than 5%, of the total fuel charge in the dual-fuel gas engine.

6. The method, dual-fuel gas engine, use or diesel fuel as claimed in any one of the preceding claims, wherein the anti-knock additive is at least one additive selected from: lead alkyls, methyl cylcopentadienyl manganese tricarbonyls, organometallic anti-knocks and organic anti-knocks.

7. The method, dual-fuel gas engine, use or diesel fuel as claimed in any one of the preceding claims, wherein the anti-knock additive is selected from: tetraethyl lead, tetramethyl lead, diethyldimethyl lead and ethyltrimethyl lead, optionally with a lead scavenger.

8. The method, dual-fuel gas engine, use or diesel fuel as claimed in any one of the preceding claims, wherein the anti-knock additive is an iron compound, preferably, ferrocene or iron carboxylate.

9. The method, dual-fuel gas engine, use or diesel fuel as claimed in any one of the preceding claims, wherein the anti-knock additive is a combination of an alkyl lead and an organometalic anti-knock compound.

10. The method, dual-fuel gas engine, use or diesel fuel as claimed in any one of the preceding claims, wherein the organic anti-knock additive is selected from: amines, hydrazines, N-nitroamines, phenols, formates, oxalates, iodine and selenium.

11. The method, dual-fuel gas engine, use or diesel fuel as claimed in any one of the preceding claims, wherein the anti-knock additive is present in an amount ranging from 1 to 5,000 ppm, preferably 1 to 2,500 ppm, and more preferably 1 to 1,000 ppm, based on the total mass of fuel charge.
